# EUROPÄISCHE PATENTSCHRIFT

(11) **EP 1 547 500 B1**
(45) Veröffentlichungstag und Bekanntmachung des Hinweises auf die Patenterteilung: **17.03.2010**
(21) Anmeldenummer: 04030373.7
(22) Anmeldetag: 21.12.2004
(51) Int. Cl.: A47J 37/07

(54) **Brennstoffpaket**
Combustion package
Récipient rempli de matière combustible

(30) Priorität: 22.12.2003 DE 10360049
(43) Veröffentlichungstag der Anmeldung: 29.06.2005
(73) Patentinhaber: Weckermann, Andreas, 48477 Hörstel (DE)
(72) Erfinder: Weckermann, Andreas, 48477 Hörstel (DE)
(74) Vertreter: Busse, Harald F.W.

(56) Entgegenhaltungen:
- EP-A- 0 943 276
- DE-A1- 2 646 911
- FR-A- 2 620 725
- GB-A- 839 602
- US-A- 4 953 533
- US-B1- 6 328 028

## Beschreibung

Die Erfindung betrifft eine Entzündvorrichtung nach dem Oberbegriff des Anspruchs 1, die beispielsweise in einem Brennstoffpaket nach dem Oberbegriff des Anspruchs 4 enthalten sein kann.

Aus der US-A-4 953 533 ist ein Brennstoffpaket bekannt, das in einer portionsgerechten Einheit zur Grillbefeuerung dienen kann. Der Benutzer braucht bei Einsatz eines solchen Pakets kann keinen großen Kohlenbeutel mitzuführen und daraus die Kohlen zu entnehmen. Auch ist in das Paket ein Festkörperanzünder integriert, so daß dieser ebenfalls nicht separat transportiert werden muß.

Allerdings bildet dieser einen ringförmigen Festkörperanzünder, der unterhalb des Bodens des dort gezeigten Behältnisses gelegen ist und der durch eine radial nach außen weisend Zündschnur entflammbar ist. Damit besteht die Gefahr, daß die Lunte am Übergang zum Festkörperanzünder erlischt, ohne daß dieser entflammt würde.

Zudem gibt es nur einen einzigen Festkörperanzünder, was die Gefahr eines Nichtzündens deutlich erhöht. Des weiteren ist offenbart, daß der igniter sogar als Teil der äußeren Verpackung dienen kann, womit klar ist, daß dieser auch Feuchtigkeit und Kälte sowie der Gefahr eines Abreißens ausgesetzt ist.

Der Erfindung liegt das Problem zugrunde, hier eine Verbesserung zu erreichen.

Die Erfindung löst das Problem durch eine Entzündvorrichtung mit den Merkmalen des Anspruchs 1 sowie durch ein eine solche Entzündvorrichtung enthaltendes Brennstoffpaket mit den Merkmalen der Ansprüche 4 oder 5. Hinsichtlich vorteilhafter Ausgestaltungen und Weiterbildungen wird auf die abhängigen Anspruche 2 und 3 sowie 6 bis 14 verwiesen.

Mit der Erfindung sind als Entzündvorrichtung mehrere Festkörperanzünder verteilt und jeweils mit der Zündschnur oder dergleichen Zündhilfe verbunden, wobei deren Anbrennen gegenüber dem Stand der Technik entscheidend dadurch verbessert ist, daß der Zündschnur und dem jeweiligen Anzünder ein Zündkopf mit Entzündbeschleuniger zwischengeordnet ist. Der Zündkopf besteht beispielsweise aus Schwefel, der Zündbesehleuniger kann beispielsweise aus einem Schwarzpulver-Schwefel-Gemisch bestehen, Phosphor kann zusätzlich enthalten sein. Diese Entzündvorrichtung stellt sicher, daß am Ende der Zündschnur diese nicht am Rand des jeweiligen Festkörperanzünders erlischt, ohne diesen in Brand zu setzten Damit ist auch vermieden, daß verschiedene Brandbeschleunigerquellen nacheinander auf einer begrenzten Fläche einzeln entzündet werden müssen. Es reicht eine einzige Zündschnur oder Zündstab aus. Die Entzündbeschleuniger und Zündköpfe müssen keine ausgasenden Stoffe enthalten. Für eine besonders lange Haltbarkeit einer Zündvorrichtung und eines ggf. damit wie in Anspruch 4 und 5 ausgestatteten Brennstoffpakets können auch Festkörperanzünder mit Paraffin oder Petroleum getränk und einzeln in eine spezielle, das Entwichen dieses Stoffes verhindernde Folie verpackt sein, wobei die Folie dann automatisch beim Entzünden des Festkörperanzünders mit verbrennt. Die Gefahr einer Verpuffung ist vermieden.

Vorteilhaft kann eine solche Entzündvorrichtung individuell ablängbar und damit an unterschiedliche Brennstoffarten und - mengen anpaßbar sein.

Eine Entzündvorrichtung, die innerhalb des Brennstoffpakets plaziert ist, wie es in Anspruch 4 oder 5 offenbart ist, bildet eine autarke und robuste Einheit darstellen, die einerseits in einer geschlossenen, umgreifenden - und widerstandsfähigen - Verpackung handelbar und transportabel ist und andererseits auch nach Entfernen dieser Verpackung noch ihre Formstabilität aufweist, wobei das brennbare Material auf einem brennbaren Untersatz gehalten ist.

Dadurch, daß der Untersatz aus brennbarem Material besteht, muß er nicht gesondert entsorgt werden, sondern kann mit den Kohlestücken zusammen abbrennen. Insbesondere kann er selbst aus Kohle bestehen und dadurch langsam mit weiteren Kohlenstücken, zum Beispiel Eierbriketts oder Holzkohle, verglühen, ohne daß es dabei zur Bildung von Flugasche oder Funkenflug kommen könne. Somit ist eine sehr saubere und sichere Verbrennung erreicht. Der Untersatz kann eine recht große eigene Dicke aufweisen, so daß das Anbrennen des Brennstoffpakets direkt auf einem äußerten Boden erfolgen kann und dieser eine erhebliche Brennzeit lang nur wenig mit Wärme beaufschlagt wird. Zudem schützt der Untersatz die Kohlestücke zum Beispiel vor Feuchtigkeit eines Bodens, auf den das entpackte Paket etwa direkt aufgelegt ist. Insbesondere kann mit der Verteilung von Zündhilfen und Größenanpassung der Kohlenstücke erreicht werden, daß diese zu einem großen Teil vor dem Untersatz abbrennen.

Besonders günstig bleibt das Brennstoffpaket auch nach Entfernen der Verpackung unverändert formstabil. Die Verpackung muß nicht mit verbrannt werden, so daß die o. g. Probleme hinsichtlich Brand- und Vcrschmutzungsgefahr vermieden werden. Die Verpackung kann dabei insbesondere durch einen ohne Schere, Messer oder dergleichen Werkzeug zu betätigenden Schnellverschluß, wie etwa einen umlaufenden Abreißfaden, öffnungsfähig sein. Dies erleichtert vor allem den mobilen Einsatz, weil dann vor Ort ein derartiges Werkzeug nicht mitgeführt werden muß. Ein äußeres Feuchtwerden der Verpackung, zum Beispiel durch eine Radtour bei Regen, gefährdet die Anzünder nicht, da die Verpackung selbst am Anbrennen nicht teilnimmt.

Zur Formstabilität auch nach Entfernen der Verpackung trägt vorteilhafterweise auch bei, daß Kohlenstücke mit dem Untersatz haftend verbunden sind, so daß ein Abgleiten der Kohlen von dem Untersatz verhindert ist.

Ein Muster von Ausnehmungen in dem Untersatz, zum Beispiel alsradial erstreckte Luftschlitze ausgebildet, verbessert den Luftzug von unten zum Durchglühen der Kohlen.

Dadurch, daß die Verpackung nicht mit verbrannt werden muß, kann diese je nach Einsatzzweck unterschiedlich ausgebildet sein. Beispielsweise kann diese für das Zurverfügungstellen von Brennstoffpaketen zur Versorgung in Katastrophengebieten wasserdicht sein. Auch ist es zur Verbesserung der Stapelbarkeit und für eine ansprechende und nicht nach Art eines Kohlenbeutels wirkende Ästhetik möglich, das die Außenkontur des Brennstoffpakets eine regelmäßige geometrische Form ausbildet und diese auch von einer in sich formstabilen Verpackung abgebildet wird. Beispielsweise kann dies eine Pyramiden- oder Kegelstumpfform sein. Ein klappbarer Tragegriff kann an der Oberseite vorgesehen sein.

Insbesondere für einen mobilen Einsatz, aber auch zur Verbesserung der Sicherheit bei einer Anwendung zu Hause ist es günstig, wenn das Brennstoffpaket zumindest einen integrierten Anzünder, insbesondere mit zumindest einer nach außen führbaren Zündschnur oder dergleichen Zündhilfe, umfaßt. Dann ist das Hantieren mit oder Mitführen von separaten Anzündhilfen - wie etwa Spiritus - entbehrlich. Die Zündschnur kann bis zum Öffnen der Verpackung geschützt innerhalb der Verpackung liegen und ist dadurch anders als im Stand der Technik von äußeren Einflüssen, insbesondere Abreißgefahr oder Feuchtigkeit, bewahrt.

Wenn die Zündschnur mit einer Reibfläche und einem daran entzündbaren Zündkopf versehen ist, kann ein Grillausflug nicht mehr daran scheitern, daß eine Zündquelle, wie etwa Streichhölzer oder ein Feuerzeug, vergessen wurden. Das Brennstoffpaket ist dann in Verbindung mit dem werkzeugfrei zu bedienenden Aufreißfaden oder dergleichen Verschluß der Verpackung völlig autark.

Ein besonders gleichmäßiges Abbrennen ist gewährleistet, sofern die Haftung von Kohlenstücken untereinander bzw. mit dem Untersatz durch einen brennbaren und als Anzünder wirkenden Haftvermittler bewirkt ist. Dieser übt dann zudem eine Doppelfunktion aus. Durch dessen Abbrennen verlieren dann die Kohlenstücke auch ihre Haftung untereinander und können gleichmäßig zur Bildung eines breiten Glutbetts verteilt werden.

Weitere Vorteile und Merkmale der Erfindung ergeben sich aus zumindest schematisch in der Zeichnung dargestellten und nachfolgend beschriebenen Ausführungsbeispielen des Gegenstandes der Erfindung.

In der Zeichnung zeigt:
- Fig. 1: eine schematische Querschnittsansicht eines erfindungsgemäßen Brennstoffpakets im verpackten Zustand,
- Fig. 2: das Brennstoffpaket nach Fig. 1 nach Entfernen der Verpackung und Herausführen der Zündschnur,
- Fig. 3: eine Detailansicht des äußeren Zündschnurendes mit einer daran angehängten Reibefläche,
- Fig. 4: einen Schnitt durch einen Festkörperanzünder mit Zündkopf und Entzündbeschleuniger an einem Ende,
- Fig. 5: eine ähnliche Ansicht wie Fig. 4, jedoch mit zwei Zündköpfen und Entzündbeschleunigern an dem Festkörperanzünder,
- Fig. 6: eine ähnliche Ansicht wie Fig. 1 eines alternativen Brennstoffpakets mit einem einzigen Anzünder durch eine Brennpaste,
- Fig. 7: eine ähnliche Ansicht wie Fig. 6 nach Entfernen des Oberteils der Verpackung,
- Fig. 8: eine ähnliche Ansicht wie Fig. 6 eines weiteren, prinzipiell ähnlichen Brennstoffpakets mit einem alternativ geformten Untersatz,
- Fig. 9: eine ähnliche Ansicht wie Fig. 8 nach Entfernen des Oberteils der Verpackung,

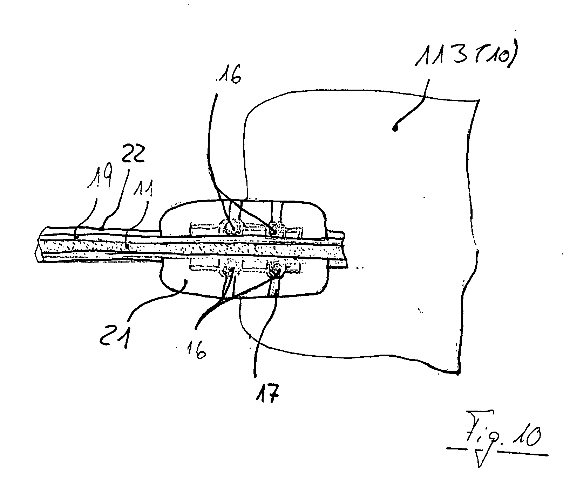

- Fig. 10: eine Detailansicht des Übergangsbereichs zwischen der Zündschnur und der Brennpaste in den Ausführungsbeispielen nach den Figuren 6 bis 9,
- Fig. 11: eine ähnliche Ansicht wie Fig. 6 eines in Draufsicht runden, prinzipiell ähnlichen Brennstoffpakets mit einem alternativ geformten Untersatz,
- Fig. 12: einen Schnitt entlang der Linie XII-XII in Fig. 11,
- Fig. 13: unterschiedliche Anordnungen von Zündschnüren und Anzündern in schematischer Übersicht,
- Fig. 14: eine Detailansicht des Zündschnurverlaufs und dadurch verbundener Anzünder in Fig. 13.

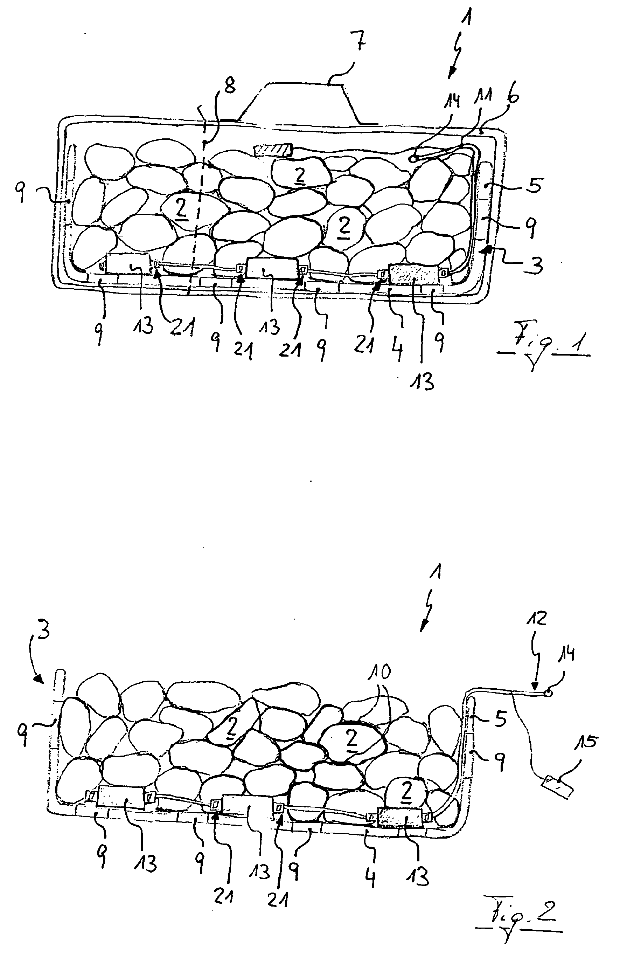

Das in Figur 1 schematisch im Überblick dargestellte und insgesamt mit 1 bezeichnete Brennstoffpaket des ersten Ausführungsbeispiels umfaßt eine Vielzahl von Kohlestücken 2, die unterseitig von einem schalenartigen Untersatz 3 abgestützt sind. Dieser weist eine Unterfläche 4 und seitlich hochgezogene Wandungen 5 auf, die sich bis in die Ebene des oberen Randes der Kohlestücke 2 erstrecken können, jedoch nicht müssen, wie weiter unten in einem weiteren Ausführungsbeispiel dargestellt ist. Das Brennstoffpaket 1 ist im geschlossenen, verkaufsfertigen Zustand nach Fig. 1 von einer Verpackung 6 umgeben. Diese besteht zum Beispiel aus Papier oder Folie oder auch einem selbst formstabilen Material, zum Beispiel einer Pappe. Im letztgenannten Fall kann die Außenkontur des Brennstoffpakets 1 eine dauerhafte regelmäßige geometrische Form aufweisen, zum Beispiel eine Pyramide, Tetraeder, Rundzylinder, Kegelstumpf oder, wie in Fig. 1 angedeutet, einen Quader. Es ergibt sich eine besonders gute Stapelbarkeit, was für das Produkt sehr vorteilhaft ist, da die Pakete kleiner als übliche Kohlenbeutel sind und daher eine große Zahl von Brennstoffpaketen 1 zu transportieren und anzubieten ist, zum Beispiel an Tankstellen, Getränkemärkten, Baumärkten oder anderen Verkaufsstellen. Zudem ergibt sich bei der formstabilen Verpackung 6 eine angenehme Optik mit glatten Seitenflächen, die auch große Werbeaufdrucke ermöglichen. Ein - ggf. ausklappbarer - Tragegriff 7 kann zur Erleichterung des individuellen Transports durch Kunden vorgesehen sein.

Typisch beträgt eine Kantenlänge des Brennstoffpakets 10 bis 30 Zentimeter. Das Gewicht kann zum Beispiel für ein einmaliges Grillen unter einem Kilogramm liegen. Es ist möglich, daß ein Sortiment von Brennstoffpaketen 1 verschiedener Größen für unterschiedlich große Grillgesellschaften vorgehalten und angeboten wird.

Zum Öffnen der Verpackung kann ein werkzeuglos zu öffnender Schnellverschluß 8, zum Beispiel ein Aufreißfaden - hier vertikal verlaufend - vorgesehen sein.

Durch die hochgezogenen Ränder 5 des zunächst mit in der Verpackung 6 befindlichen Untersatzes 3 behält das Brennstoffpaket auch nach Entfernen der Verpackung 6 seine zum Beispiel quaderartige Form bei, selbst wenn die Kohlestücke 2 nicht aneinander haften. Zusätzlich ist ein Aneinanderhaften von Kohlestücken 2 durch einen Haftvermittler 10 zum Beispiel in Gestalt einer (Brenn-) Paste möglich.

Der Untersatz 3 kann einstückig sein und besteht insgesamt aus brennbarem Material, hier aus formgerecht verpreßter Kohle. Um eine besonders gute Formstabilität des entpackten Brennstoffpakets zu sichern, kann ein Teil der Kohlenstücke 2 mit dem Untersatz 3 haftend verbunden sein. Der Untersatz 3 ist zumindest an seiner Unterfläche 4 mit einem hier gleichmäßigen Muster von Ausnehmungen 9 versehen, die als Belüftungsschlitze für die Glut dienen.

Des weiteren umfaßt das Brennstoffpaket 1 eine Zündschnur, einen Zündstab oder eine ähnliche zeitverzögernde Zündhilfe 11, die anders als im genannten Stand der Technik nicht nur direkt mit Kohlestücken 2 in Kontakt steht, sondern auch nach außen führbar und an ihrem von den Kohlen 2 entfernten Ende 12 entzündbar ist. Dabei besteht aufgrund des Abstandes des Endes 12 zu den Kohlestücken 2 nicht die Gefahr, daß ein Benutzer sich an heftig aufflammenden Anzündern 13 verbrennt, die die Kohlenstücke 2 in Brand setzen sollen und daher zwischen diese integriert sind. Ein großer Vorteil der Erfindung besteht darin, daß die Zündhilfe 11 während des Transportprozesses zu den Verkaufsstellen und auch des Weitertransports zur Einsatzstelle zunächst innerhalb der Verpackung 6 vor insbesondere Abreißen und Feuchtigkeit geschützt gehalten ist und erst nach Entfernen der Verpackung 6 zugänglich und nach außen führbar ist. Dadurch ergibt sich eine besondere Zuverlässigkeit der fernentzündbaren und daher zeitverzögernden Zündhilfe 11.

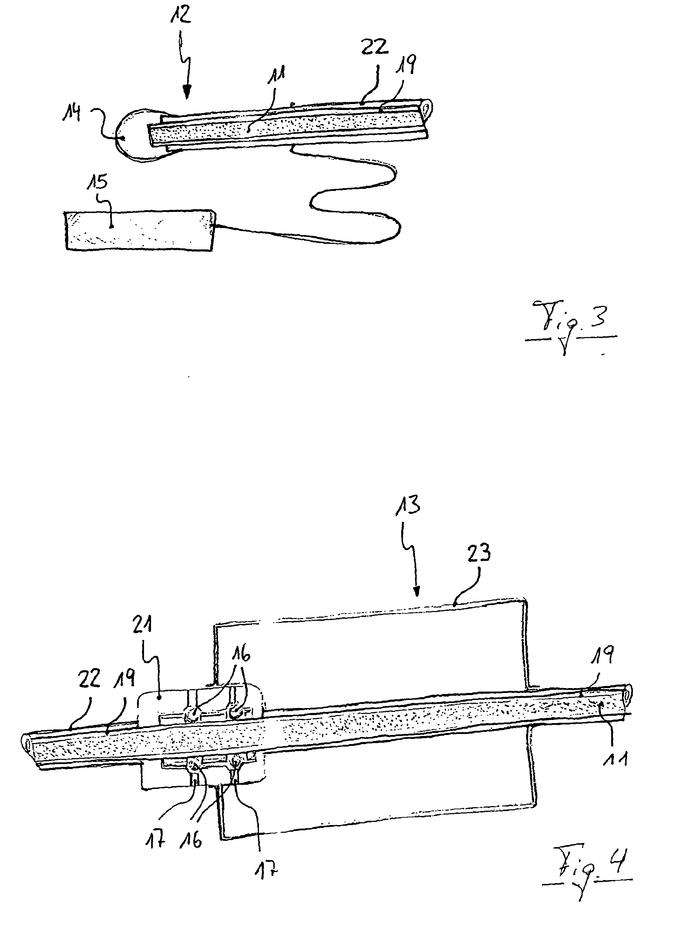

Um auch von Feuerzeugen oder Streichhölzern unabhängig zu sein, kann zusätzlich am äußeren Ende 12 der Zündhilfe 11 ein Anzündkopf 14, zum Beispiel mit Schwefel oder einem anderen leicht entzündbaren Stoff, sowie eine separat bewegliche Reibefläche 15 (oder umgekehrt) vorgesehen sein (Fig. 3). Dann ist das Brennstoffpaket 1 völlig autark zu verwenden.

Im Ausführungsbeispiel nach den Figuren 1 bis 5 führt die einzige Zündhilfe 11, zum Beispiel Zündschnur, in mehrere Zündköpfe 13, die jeweils Festkörperanzündern 13 zwischengeordnet sind. Diese sind zwischen den Kohlestücken 2 in deren unterem Bereich möglichst gleichmäßig verteilt.

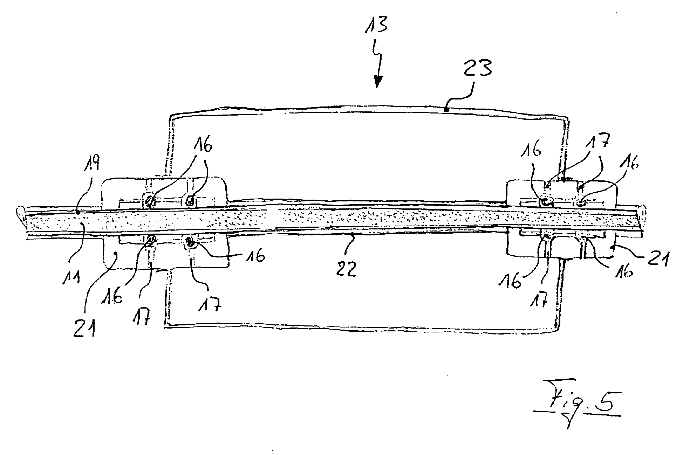

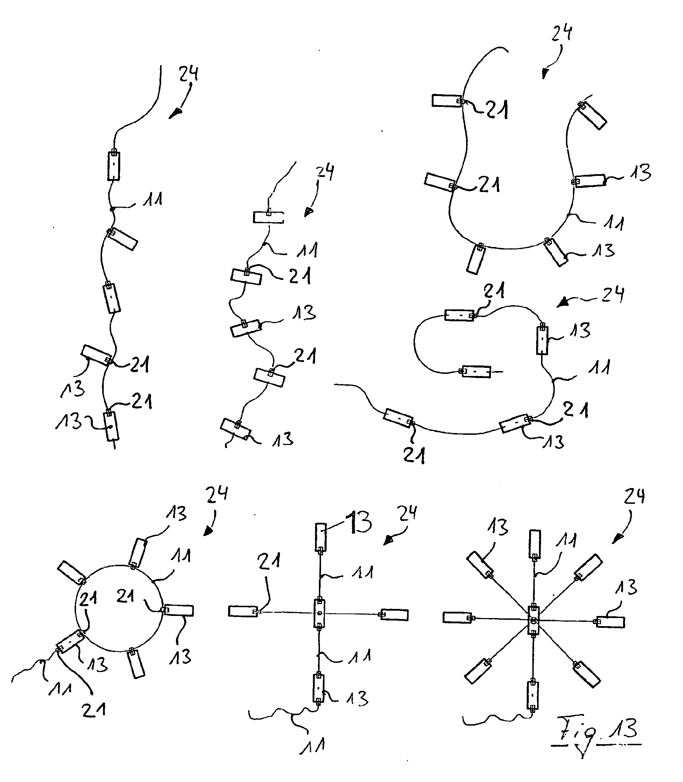

In Fig. 13 sind beispielhaft verschiedene Möglichkeiten gezeigt, mehrere Anzünder 13 mit einer gemeinsamen Zündschnur 11 zu verbinden. In jedem Fall genügt ein einmaliges Entzünden des Endes 12, um alle Anzünder 13 zu aktivieren. Die Zündschnur 11 kann, wie etwa in den Figuren 4 und 5 gezeigt ist, die Zündköpfe 21 und Anzünder 13 durchdringen. Der weitere Durchbrand der Zündschnur 11 ist durch die Zündköpfe 21 und Anzünder 13 nicht behindert. Die Anzünder 13 sind als Dauerschutz gegen Feuchtigkeit und gegen Ausgasen einzeln in brennbare Folie 23 verpackt. Die Anzahl der Anzünder 13 in der Entzündvorrichtung 24 ist variabel je nach Größe des Brennstoffpakets 1. Ein Durchtrennen der Zündschnur 11 kann individuell die Anzahl der damit verbundenen Anzünder 13 vorgeben.

Wesentlich für ein zuverlässiges Anbrennen der Anzünder 13 ist das Vorsehen von zumindest einem Entzündbeschleuniger 16, der zwischen der Zündschnur 11 und dem eigentlichen Anzünder 13 vorgesehen ist und der bewirkt, daß die glühende Zündschnur 11 eine große Hitze zum Entzünden des Zündkopfs 21 bewirken kann. Mit dem Entzündbeschleuniger 16 können die Anzünder 13 auch relativ weit unten in den Kohlestücken 2 liegen, was deren optimales Anbrennen und Durchglühen unterstützt. Ein zusätzlicher zweiter Zündkopf 21 an einem Anzünder 13 sorgt für gesteigerte Sicherheit seines Entzündens, auch wenn er zum Beispiel beim Packen des Brennstoffpakets beschädigt wurde.

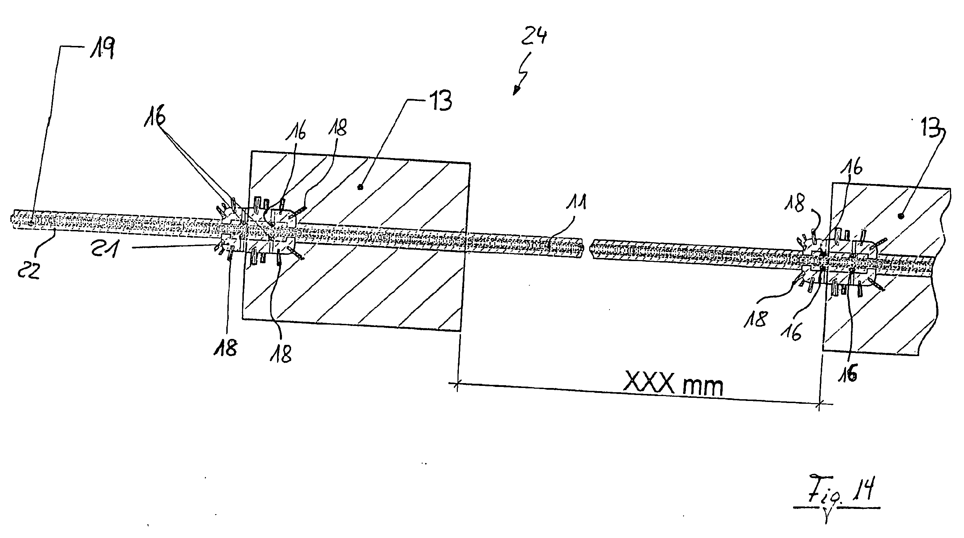

Ein Entzündbeschleuniger 16 umfaßt hier ein Gemisch aus Schwarzpulver und Schwefel und ist jeweils in einem radial von der Zündschnur 11 auswärts weisenden Luftkanal 17 angeordnet. Ihre Anzahl ist variabel. In Fig. 14 ist ein Zündkopf 21 dargestellt, der zusätzlich nach außen hin mit einem Hilfsbrennstoff 18 versehen ist. Dieser umfaßt zum Beispiel Holzspäne oder andere längliche Stoffe, die den Abbrand der Anzünder 13 weiter absichern und verstärken. Die Zündschnur 11 kann von einem Schwarzpulvermantel 19 umgeben sein. Ein äußerer Deckmantel 22 bietet als thermischer Isolator zusätzliche Sicherheit für die Benutzer und ist im Bereich der Zündköpfe 21 ausgenommen, so daß diese direkt auf dem Schwarzpulvermantel 19 sitzen. Durch die Ausnehmungen sind die Anzünder 13 in ihrer Lage auf der Zündschnur 11 gegen Verrutschen gesichert.

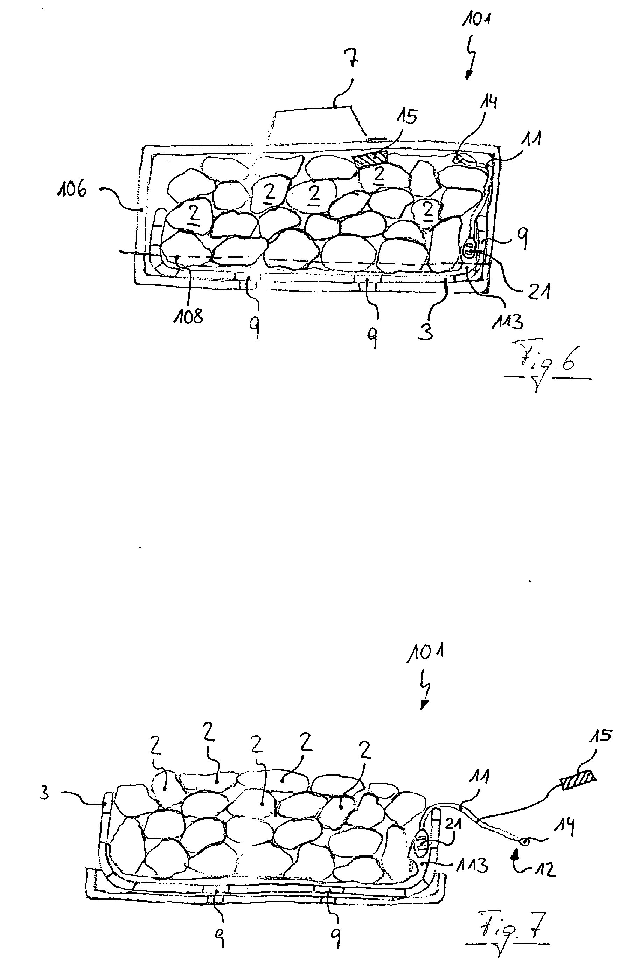

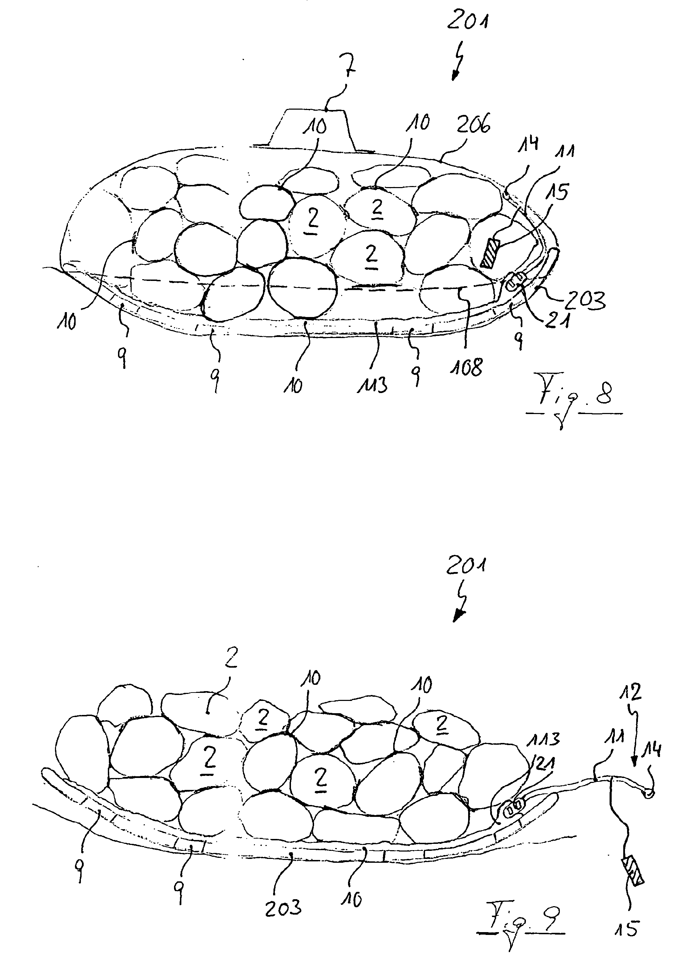

In den Ausführungsbeispielen nach Fig. 6 und 7 bzw. nach Fig. 8 und 9 ist an Stelle einzelner Zündköpfe 13 ein großflächig vernetzter Zünder in Gestalt einer Brennpaste 113 vorgesehen.

Das alternative Brennstoffpaket 101 nach den Figuren 6 und 7 weist bei prinzipieller Ähnlichkeit zum ersten Ausführungsbeispiel einen horizontalen Aufreißfaden 108 auf, der es ermöglicht, daß der obere Verpackungsteil nach Art einer Haube abhebbar ist (Übergang von Fig. 6 zu Fig. 7). Der Untersatz 3 ist hier gleichartig zum ersten Ausführungsbeispiel ausgebildet, allerdings mit einer großflächig verteilten Brennpaste als Anzünder 113 an Stelle einzelner Anzünder 13 versehen. Auch hier ist die Zündschnur 11 zunächst innerhalb der Verpackung 106 gehalten und kann nach deren Öffnen herausgeführt werden. Am Übergang von der Zündschnur 11 zur Brennpaste 113 ist wiederum zumindest ein Zündkopf 21 mit Entzündbeschleuniger 16 vorgesehen, der das sichere Anbrennen der Brennpaste 113 bewirkt. Die Brennpaste 113 kann in Doppelfunktion auch als Haftvermittler 10 zwischen Kohlestücken 2 untereinander oder zwischen Kohlestücken 2 und dem Untersatz 3 dienen.

Das Ausführungsbeispiel des Brennstoffpakets 201 nach den Figuren 8 und 9 ist dem eben erläuterten sehr ähnlich, nur ist hier die Form des Untersatzes 203 und der Verpackung 206 geändert. Der Untersatz 203 ist eher tellerartig flach, zumindest einige der Kohlestücke 2 sind miteinander haftend verbunden.

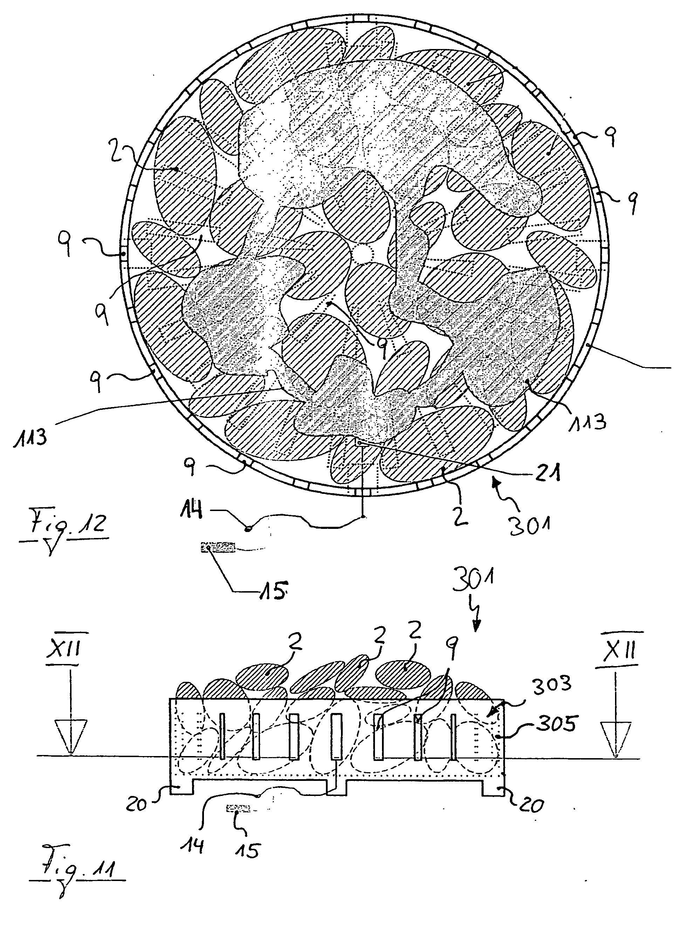

In den Figuren 11 und 12 ist ein weiteres Ausführungsbeispiel eines in Draufsicht runden und relativ großen Brennstoffpakets 301 gezeigt. Der Untersatz 303 weist vertikale Seitenwandungen 305 mit ebenfalls Ausnehmungen 9 sowie nach unten hin Standfüße 20 auf, die den Luftdurchsatz durch die Glut aufgrund ihrer Abstandsfunktion zum Boden erhöhen.

### Bezugszeichenliste:

- 1, 101, 201, 301: Brennstoffpaket,
- 2: Kohlenstücke,
- 3, 203, 303: Untersatz,
- 4: Unterfläche,
- 5, 305: Wandungen,
- 6, 106, 206: Verpackung,
- 7: Tragegriff,
- 8, 108: Schnellverschluß,
- 9: Ausnehmungen,
- 10: Haftvermittler,
- 11: Zündhilfe,
- 12: deren äußeres Ende,
- 13, 113: Anzünder,
- 14: Anzündkopf,
- 15: Reibefläche,
- 16,: Entzündhilfe,
- 17: Luftkanal,
- 18: Hilfsbrennstoff,
- 19: Schwarzpulvermantel,
- 20: Standfüße,
- 21: Zündkopf,
- 22: Deckmantel,
- 23: Umhüllung,
- 24: Entzündvorrichtung

## Patentansprüche

1. Entzündvorrichtung (24) für ein Brennstoffpaket (1;101; 201;301) mit einer Vielzahl von Kohle- oder Holzstücken (2),
**dadurch gekennzeichnet,**
**daß** die Entzündvorrichtung (24) mehrere Festkörperanzünder (13) umfaßt, die jeweils mit einer Zündschnur oder dergleichen Zündhilfe (11) verbunden sind, wobei der Zündschnur oder dergleichen Zündhilfe (11) und einem jeweiligen Anzünder (13) zumindest ein Zündkopf (21) mit einem oder mehrere Entzündbeschleunigcr(n) (16) zwischengeordnet ist.

2. Entzündvorrichtung nach Anspruch 1,
**dadurch gekennzeichnet,**
**daß** diese bedarfsgerecht ablängbar ist.

3. Entzündvorrichtung nach einem der Ansprüche 1 oder 2,
**dadurch gekennzeichnet,**
**daß** die Festkörperanzünder (13) jeweils in einer brennbaren, den Durchtritt von Gas und Wasser hemmenden Umhüllung (2;3) gehalten sind.

4. Formstabiles Brennstoffpaket (1;101;201;301) mit einer Entzündvorrichtung (24) nach einem der Ansprüche 1 bis 3 und mit einer Vielzahl von auf einem Untersatz (3;203;303) angeordneten Kohlestücken (2) und einer umgreifenden Verpackung (6;106;206),
**dadurch gekennzeichnet,**
**daß** der Untersatz (3;203;303) aus brennbarem Material besteht.

5. Formstabiles Brennstoffpaket (1;101;201;301) mit einer Entzündvorrichtung (24) nach einem der Ansprüche 1 bis 3 und mit einer Vielzahl von auf einem Untersatz (3;203;303) angeordneten Kohlestücken (2) und einer umgreifenden Verpackung (6;106;206), insbesondere nach Anspruch 4,
**dadurch gekennzeichnet,**
**daß** das Brennstoffpaket (1;101;201;301) auch nach Entfernen der Verpackung formstabil ist.

6. Brennstoffpaket (1;101;201;301) nach einem der Ansprüche 4 oder 5,
**dadurch gekennzeichnet,**
**daß** Kohlestücke (2) mit dem Untersatz (3;203;303) haftend verbunden sind.

7. Brennstoffpaket (1;101;201.;301) nach einem der Ansprüche 4 bis 6,
**dadurch gekennzeichnet,**
**daß** der Untersatz (3;203;303) einen Teller oder eine Schale aus verpreßter Kohle bildet.

8. Brennstoffpaket (1;101;201;301) nach einem der Ansprüche 4 bis 7,
**dadurch gekennzeichnet,**
**daß** der Untersatz (3;203;303) mit einem Muster von Ausnehmungen (9) versehen ist.

9. Brennstoffpaket (1;101;201;301) nach einem der Ansprüche 14 bis 8,
**dadurch gekennzeichnet,**
**daß** dessen Außenkontur eine regelmäßige geometrische Form ausbildet.

10. Brennstoffpaket (1;101;201;30110) nach Anspruch 9,
**dadurch gekennzeichnet,**
**daß** die Verpackung (6;106;206) formstabil die geometrische Form abbildet.

11. Brennstoffpaket (1;101;201;301) nach einem der Ansprüche 4 bis 10,
**dadurch gekennzeichnet,**
**daß** dieses zumindest einen integrierten Anzünder (13;113) umfaßt.

12. Brennstoffpaket (1;101;201;301) nach einem der Ansprüche 4 bis 11,
**dadurch gekennzeichnet,**
**daß** die Haftung von Kohlestücken (2) untereinander bzw. mit dem Untersatz (3;203;303) durch einen brennbaren und als Anzünder (113) wirkenden Haftvermittler (10) bewirkt ist.

13. Brennstoffpaket (1;101;201;301) nach einem der Ansprüche 4 bis 12,
**dadurch gekennzeichnet,**
**daß** dieses eine nach außen führbare Zündschnur oder dergleichen Zündhilfe (11) umfaßt.

14. Brennstoffpaket (1;101;201;301) nach Anspruch 13,
**dadurch gekennzeichnet,**
**daß** die Zündschnur (11) mit einer Reibfläche (15) und einem daran entzündbaren Anzündkopf (14) versehen ist.

## Claims

1. An ignition apparatus (24) for a fuel package (1; 101; 201; 301) with a plurality of pieces (2) of coal or wood, **characterized in that** the ignition apparatus (24) comprises a plurality of solid-state igniters (13), each connected to a fuse cord or similar ignition aid (11), wherein at least one ignition head (21) with one or more ignition accelerators (16) is arranged between the fuse cord or similar ignition aid (11) and a respective igniter (13).

2. An ignition apparatus according to Claim 1, **characterized in that** it is capable of being cut to length in accordance with requirements.

3. An ignition apparatus according to one of Claims 1 or 2, **characterized in that** the solid-state igniters (13) are each held in a combustible sheathing (2; 3) which prevents the passage of gas and water.

4. A dimensionally stable fuel package (1;101;201;301) with an ignition apparatus (24) according to any one of Claims 1 to 3, and with a plurality of pieces (2) of coal arranged on a substructure (3; 203; 303) and a surrounding packing (6; 106; 206), **characterized in that** the substructure (3; 203; 303) comprises combustible material.

5. A dimensionally stable fuel package (1; 101; 201; 301) with an ignition apparatus (24) according to any one of Claims 1 to 3, and with a plurality of pieces (2) of coal arranged on a substructure (3; 203; 303) and a surrounding packing (6; 106; 206), in particular according to Claim 4, **characterized in that** the fuel package (1; 101; 201; 301) is dimensionally stable even after the removal of the packing.

6. A fuel package (1; 101; 201; 301) according to one of Claims 4 or 5, **characterized in that** pieces (2) of coal are joined to the substructure (3; 203; 303) in an adhesive manner.

7. A fuel package (1; 101; 201; 301) according to any one of Claims 4 to 6, **characterized in that** the substructure (3; 203; 303) forms a plate or a dish of pressed coal.

8. A fuel package (1; 101; 201; 301) according to any one of Claims 4 to 7, **characterized in that** the substructure (3; 203; 303) is provided with a pattern of recesses (9).

9. A fuel package (1; 101; 201; 301) according to any one of Claims 4 to 8, **characterized in that** the outer contour thereof forms a regular geometrical shape.

10. A fuel package (1; 101; 201; 301) according to Claim 9, **characterized in that** the packing (6; 106; 206) forms the geometrical shape in a dimensionally stable manner.

11. A fuel package (1; 101; 201; 301) according to any one of Claims 4 to 10, **characterized in that** it comprises at least one integrated igniter (13; 113).

12. A fuel package (1; 101; 201; 301) according to any one of Claims 4 to 11, **characterized in that** the adhesion of pieces (2) of coal between themselves or the substructure (3; 203; 303) is effected by a combustible adhesion agent (10) which acts as an igniter (113).

13. A fuel package (1; 101; 201; 301) according to any one of Claims 4 to 12, **characterized in that** it comprises an outwardly movable fuse cord or similar ignition aid (11).

14. A fuel package (1; 101; 201; 301) according to Claim 13, **characterized in that** the fuse cord (11) is provided with a friction surface (15) and an ignition head (14) capable of being ignited thereon.

## Revendications

1. Dispositif d'allumage (24) pour un paquet de matière combustible (1 ; 101 ; 201 ; 301) comprenant une pluralité de fragments de charbon ou de bois (2),
**caractérisé en ce que**
le dispositif d'allumage (24) comprend plusieurs allumeurs solides (13) qui sont reliés respectivement à un cordon d'allumage ou à un auxiliaire d'allumage analogue (11), dans lequel au moins une tête d'allumage (21) comprenant un ou plusieurs accélérateurs d'allumage est aménagé entre le cordon d'allumage ou l'auxiliaire d'allumage analogue (11) et un allumeur respectif (13).

2. Dispositif d'allumage selon la revendication 1,
**caractérisé en ce que**
le dispositif peut être dimensionné en fonction des besoins.

3. Dispositif d'allumage selon l'une quelconque des revendications 1 ou 2,
**caractérisé en ce que**
les allumeurs solides (13) sont retenus respectivement dans une gaine combustible (2 ; 3) freinant le passage des gaz et de l'eau.

4. Paquet de matière combustible (1 ; 101 ; 201 ; 301) de forme stable, comprenant un dispositif d'allumage (24) selon l'une quelconque des revendications 1 à 3 et une pluralité de fragments de charbon (2) agencés sur un support (3 ; 203 ; 303) et un emballage (6 ; 106 ; 206) qui les entoure,
**caractérisé en ce que**
le support (3 ; 203 ; 303) est constitué d'un matériau combustible.

5. Paquet de matière combustible (1 ; 101 ; 201 ; 301) de forme stable, comprenant un dispositif d'allumage (24) selon l'une quelconque des revendications 1 à 3 et une pluralité de fragments de charbon (2) agencés sur un support (3 ; 203 ; 303) et un emballage (6 ; 106 ; 206) qui les entoure, en particulier selon la revendication 4,
**caractérisé en ce que**
le paquet de matière combustible (1 ; 101 ; 201 ; 301) a une forme stable même après retrait de l'emballage.

6. Paquet de matière combustible (1 ; 101 ; 201 ; 301) selon l'une quelconque des revendications 4 et 5,
**caractérisé en ce que**
les fragments de charbon (2) sont liés au support (3 ; 203 ; 303) par adhérence.

7. Paquet de matière combustible (1 ; 101; 201 ; 301) selon l'une quelconque des revendications 4 à 6,
**caractérisé en ce que**
le support (3 ; 203 ; 303) forme un plateau ou une coque en charbon pressé.

8. Paquet de matière combustible (1 ; 101 ; 201 ; 301) selon l'une quelconque des revendications 4 à 7,
**caractérisé en ce que**
le support (3 ; 203 ; 303) est pourvu d'un motif de creux (9).

9. Paquet de matière combustible (1 ; 101; 201 ; 301) selon l'une quelconque des revendications 4 à 8,
**caractérisé en ce que**
son contour externe se présente avec une forme géométrique régulière.

10. Paquet de matière combustible (1 ; 101 ; 201 ; 301) selon la revendication 9,
**caractérisé en ce que**
l'emballage (6 ; 106 ; 206) présente la forme géométrique de manière stable.

11. Paquet de matière combustible (1 ; 101; 201 ; 301) selon l'une quelconque des revendications 4 à 10,
**caractérisé en ce que**
le paquet comprend au moins un allumeur intégré (13 ; 113).

12. Paquet de matière combustible (1 ; 101 ; 201 ; 301) selon l'une quelconque des revendications 4 à 11,
**caractérisé en ce que**
l'adhérence des fragments de charbon (2) entre eux ou avec le support (3 ; 203 ; 303) est assurée par un agent adhésif (10) combustible servant d'allumeur (113).

13. Paquet de matière combustible (1 ; 101; 201 ; 301) selon l'une quelconque des revendications 4 à 12,
**caractérisé en ce que**
le paquet comprend un cordon d'allumage ou un auxiliaire d'allumage analogue (11) qui peut être guidé vers l'extérieur.

14. Paquet de matière combustible (1 ; 101 ; 201 ; 301) selon la revendication 13,
**caractérisé en ce que**
le cordon d'allumage (11) est pourvu d'une surface de frottement et d'une tête d'allumage (14) qui peut être enflammée sur celle-ci.
